# EUROPEAN PATENT SPECIFICATION

(11) **EP 0 919 898 B1**
(45) Date of publication and mention of the grant of the patent: **16.04.2003**
(21) Application number: 98830701.3
(22) Date of filing: 20.11.1998
(51) Int. Cl.: G05D 16/06

(54) **A set of parts for making pilot-operated gas pressure regulators**
Bauteilsatz für die Herstellung von vorgesteuerten Gasdruckreglern
Ensemble de pièces pour fabriquer des régulateurs de pression de gaz pilotés

(30) Priority: 28.11.1997 IT BO970693
(43) Date of publication of application: 02.06.1999
(73) Proprietor: O.M.T. OFFICINA MECCANICA TARTARINI S.p.A., 40013 Castel Maggiore (Bologna) (IT)
(72) Inventor: Tartarini, Roberto, 40013 Castel Maggiore (Bologna) (IT)
(74) Representative: Lanzoni, Luciano

(56) References cited:
- FR-A- 2 172 493
- US-A- 4 615 353
- US-A- 5 086 807

## Description

The present invention relates to a set of parts for making pilot-operated gas pressure regulators.

At present, gas pressure regulators, also known as gas pressure reducers, with "pilot-operated" gas flow, comprise a single body, usually made by casting and having the flanges for connecting the reducer to the high-pressure gas infeed pipe and to the user-pressure gas delivery pipe.

This body houses the gas pressure regulation devices, such as the sleeves (one or, usually, two, opposite one another, of which one is the main regulator proper and the other, usually known as "monitor" is a safety sleeve that comes into operation in the event of failure of the former) controlled by spring and diaphragm systems which enable it to slide along its axis and by devices (such as the "pilot") designed to check gas pressure upstream and downstream of the regulator.

Since gas supply installations require different sized feed and delivery pipes (according to the flow rates and pressures) and different architectures (for example, pipes placed coaxially or at an angle to each other) according to the type of installation, the policy currently followed by construction companies is to provide a different regulator design for every different market need.

This approach to market requirements, however, has numerous disadvantages in that the wide range of regulator designs results in high production costs to which must be added high warehouse costs due to the large numbers of designs that must be kept in stock in order to be able to meet users' needs at any time. Relevant prior art is disclosed is US 4 615 353.

In order to overcome these disadvantages, the Applicant has invented and produced a set of modular parts for making pilot-operated gas pressure regulators having an extremely practical and economical structure and making it possible to obtain, from a base unit, a plurality of different modules for different installation requirements. The invention is defined in claim 1.

The technical characteristics of the invention according to the above mentioned aims are described in the claims below and the advantages of the invention will become more apparent from the detailed description which follows, with reference to the accompanying drawings, which illustrate a preferred embodiment of the invention and in which:
- Figure 1 shows a set of parts forming a first model of gas pressure regulator made in accordance with the present invention, viewed in section through a longitudinal axis;
- Figure 2 is a perspective and partly exploded view of the body forming part of the regulator shown in Figure 1;
- Figure 3 is a perspective and partly exploded view of the body shown in Figure 2 to which auxiliary means have been added;
- Figure 4 shows the body forming part of the regulator in a perspective view with some parts cut away in order to better illustrate the parts inside it;
- Figure 5 shows the regulator model of Figure 1 viewed from side A in Figure 1 and with some parts cut away and others in section;
- Figure 6 shows another model of regulator made in accordance with the present invention, viewed in section through a longitudinal axis.

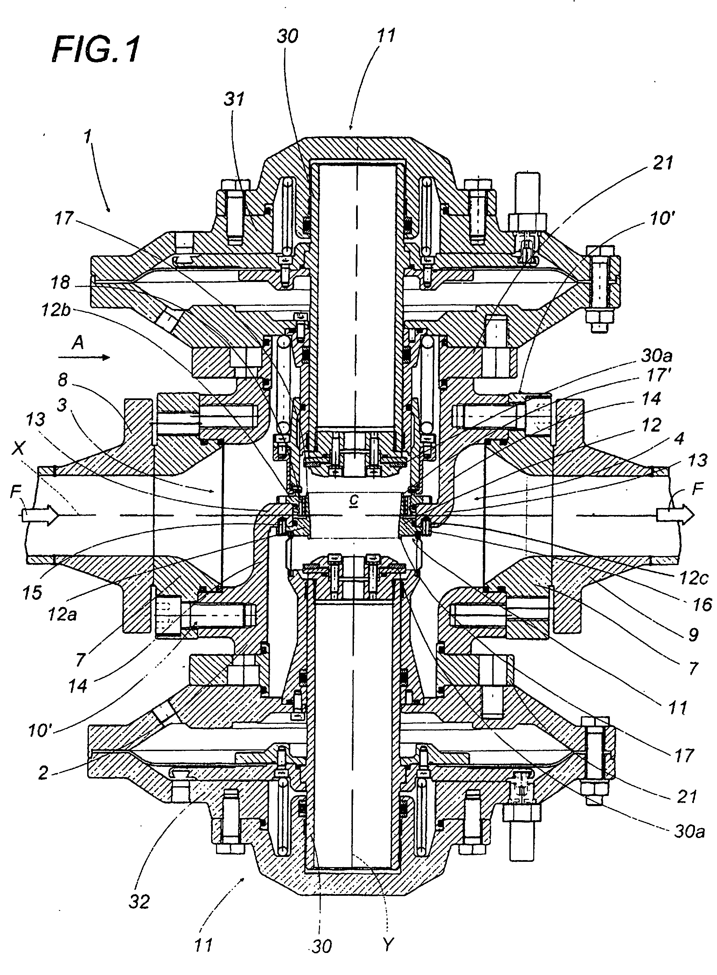

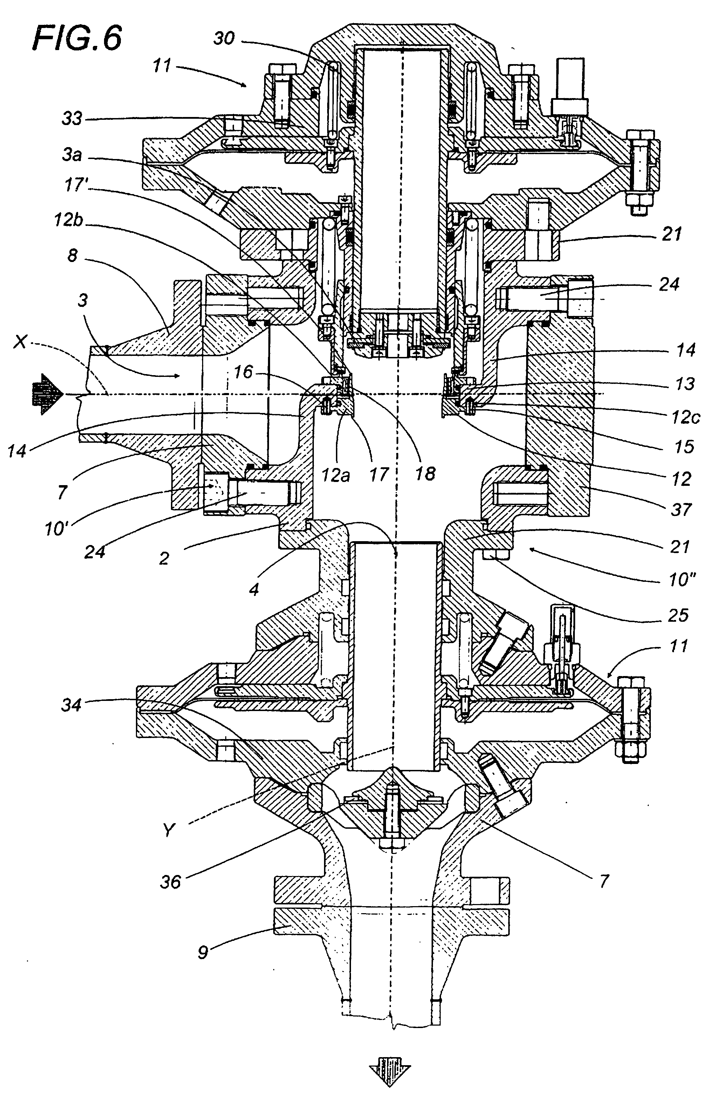

With reference to the accompanying drawings, in particular Figure 1, the set of parts disclosed herein is used to make a gas pressure regulator, labelled 1 as a whole, of the pilot-operated type and for different uses according to the different sizes of the pipes where it is to be installed: in other words, the structure of the regulator comprises a fixed base unit to which different working and connecting parts can be applied, as required by the installation where the regulator is to be fitted and by the size of the pipes of the installation. Figures 1 and 6 show two regulator configurations that can be made using the set of parts disclosed herein but many other configurations can be obtained, as described below.

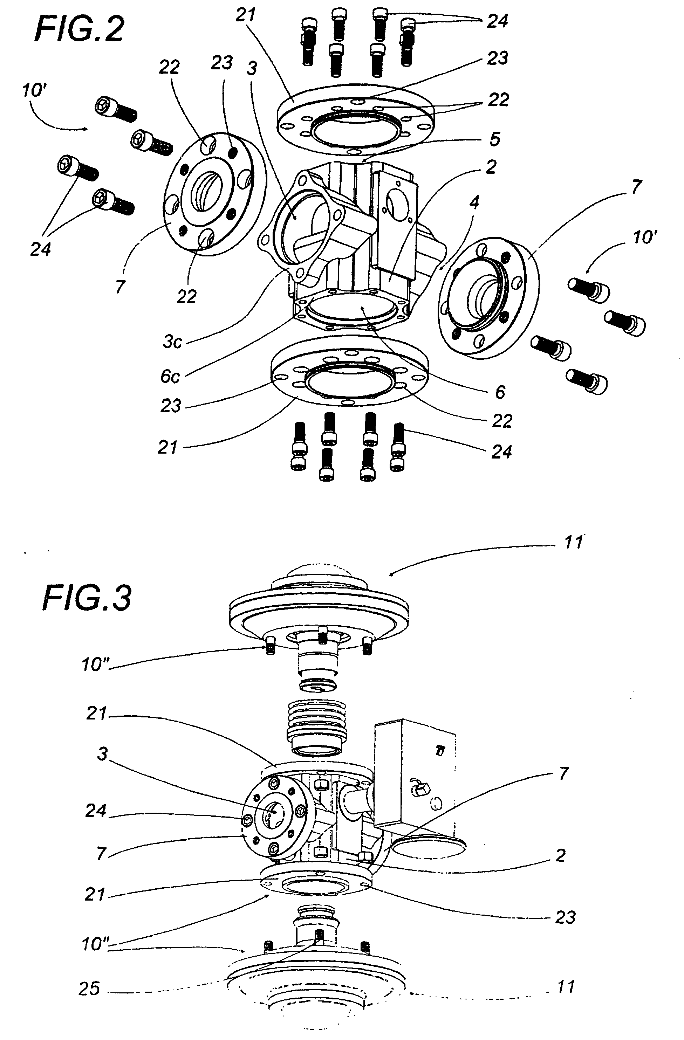

The regulator 1 essentially comprises the base unit or body 2 (also illustrated in Figures 2, 3 and 4) consisting of a single block (made preferably by casting) and having a gas inlet port 3 and a gas outlet port 4 and a pair of auxiliary holes 5 and 6 arranged crossways (see also the two perpendicular axes X and Y).

The ports 3 and 4 and the holes 5 and 6 are configured differently according to requirements: for example, in Figure 1, the ports 3 and 4 are coaxial with the axis X, while in Figure 6, the inlet port 3 is along the axis X and the outlet port 4 is at an angle of 90° to it, that is to say, along the axis Y of the body 2 so that the gas is made to flow along a different path. This will obviously depend on the type of installation and on the arrangement of the gas pipes to which the regulator will be connected.

The numeral 7 indicates a pair of flanges forming part of a set of flanges (the different pairs are not illustrated since they differ only in size but not in their paired structure) used to connect the corresponding gas infeed and delivery pipes 8 and 9.

The flanges 7 differ in size according to where the regulator 1 will be used and to the diameters of the pipes 8 and 9. The flanges 7 can be attached, using first means 10', to the inlet port 3 and outlet port 4 of the body 2.

In Figures 1, 3, 5 and 6, the numeral 11 indicates auxiliary means for checking and regulating the flow of gas and/or for closing the auxiliary holes 5 and 6 (if necessary). These auxiliary means 11, whose structures and functions will be described below, can be connected to the holes 5 and 6, using second means 10", in structures and configurations that depend on where the regulator 1 will be used, as mentioned above.

Figures 2, 3 and 4 show that each of the zones of the body 2 forming the inlet port 3 and the outlet port 4 or the auxiliary holes 5 and 6 form a corresponding circular portion (labelled, 3c, 4c, 5c and 6c, respectively) that receives the flanges 7 or the auxiliary means 11 through an intermediate crown 21.

In each flange 7 and each intermediate crown 21 there are two sets of holes 22 and 23: the first set of holes 22 is used to attach the flange 7 and the ring 21 to the corresponding circular portion 3c, 4c and 5c and 6c, respectively, using screw means 24, while the second set of holes 23 is used together with second screw means 25 to attach the flange 7 to the corresponding pipes 8 and 9 (not illustrated here) and the crown 21 to the auxiliary means 11.

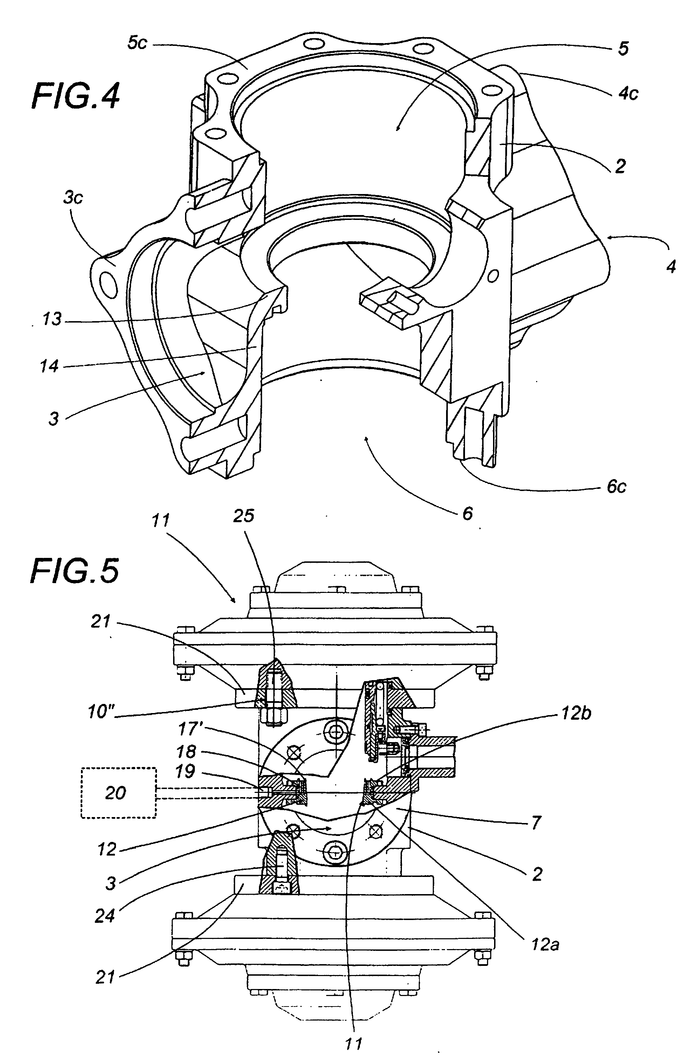

In short, in the case of the flanges 7, the first screw means 24 form the aforementioned first attachment means 10', while the intermediate crown, together with the second screw means 25 form the second attachment means 10" (see Figure 3 again).

The above mentioned auxiliary means 11 comprise an inner ring 12 located centrally in the body 2 around the centre C of the cross made by the aforementioned axes X and Y so as to form a calibrated passage for the gas flow.

The ring 12 consists of two halves 12a and 12b (see Figures 1, 5 and 6) of which the first, the lower one in the figures, is fixed to a counter-ring 13 forming part of a toroidal wall 14 inside the body 2, while the second half, the upper one, is screwed to the first half thanks to the threading 15 on the two halves 12a and 12b.

The configuration of the toroidal wall 14 (see Figures 1, 4 and 6) forms two passageways in the ports 3 and 4 for the flow of gas in the direction of, or arriving from, the ring 12 and, at the same time, divides the body 2 into at least two separate chambers between which the gas pressure is reduced by the means 11.

Still looking at Figures 1, 4, 5 and 6, it can be seen that the half 12a of the ring 12 has slots in its base used to fix it to the counter-ring 13 through coupling means 16 (represented by pins which act as anti-rotation elements when the upper half 12b is screwed on). Moreover, each half 12a and 12b of the ring 12 has, on opposite sides, a pair of ring-shaped protrusions 17 and 17' acting as a stop element for a seal 30a (or "sealing pad") of sleeve 30 that form the means 11 for checking and regulating the gas flow F.

The upper half 12b also has in it one or more holes 18 one end of which is on its base while the other end leads to a transverse duct 19 (see detail in Figure 5) made in the body 2 and leading out of the body to connect with corresponding external means 20 for checking the operation of the regulator 1, forming, in practice, a conventional "pilot" unit, illustrated here as a simple block.

The configurations illustrated in Figures 1 and 4, as mentioned above, are just two examples to give an idea of the efficacy of the modular structure described up to now.

In the case shown in Figure 1 (regulator and flow along the axis X), there are two groups of tube regulators 31 and 32 positioned coaxially along the axis Y and substantially transversal to the direction of gas flow (indicated by the arrow F).

The structure of the regulators 31 and 32 is only partly illustrated since it is well known to experts in the trade. Each unit 31 and 32 is connected to the corresponding auxiliary holes 5 and 6 through the intermediate crowns 21.

The lower regulator 32 normally reduces the gas pressure (and is of the type known to experts in the trade as FAIL TO OPEN or FAIL TO CLOSE), while the upper regulator, labelled 31, is the stand-by regulator which comes into operation if the other regulator fails (the safety regulator is normally of the FAIL TO CLOSE type).

Thanks to the ring-shaped slot 18, positioned on the inner side of the stop area of the pad 30a and connected to the pilot unit 20, it is possible to measure the residual pressure in the body 2 in order to be able to safely shut off the system.

In the case shown in Figure 6 (where the regulator and flow make a 90° turn following the axes X and Y), the regulator 1 comprises an upper tube reducer, connected to the hole 6 in the body 2 and along the axis Y, and a lower axial regulator 34 (of known type) with an axially adjustable sleeve 35 and fixed pad 36. The axial regulator 34 is connected, in this case, to the lower port 4 along the axis Y of the body 2 through the intermediate crown 21, while the flange 7 connecting it to the pipe 9 is located at the other end.

In this case, the gas flow F from the pipe 8 goes in through port 3, coaxially with the axis X and then, passing through the ring 12, turns towards the axial regulator 34 and goes out into the user pipe 9. The hole 5, on the other hand, is sealed by a stopper 37.

Therefore, the set of parts disclosed herein and used to make pressure regulators achieves the abovementioned aims through an unvarying basic structure to which the working parts described above, that is, the sleeve and axial regulator units, can be applied in different ways using the parts, such as the flanges, to connect them to the external pipes or having stoppers to close them off when these are not used.

Thanks to this structure, it is possible to use the same body for every working requirement, such as different flow rates, by simply changing the connecting flanges or applying different types of sleeve according to the ideal gas flow required, to obtain a regulator that is not only compact but also safe because the reliability of the component parts is guaranteed. Moreover, the invention offers important economic advantages in that the single body used allows considerable savings by reducing production costs (the basic structure is a single casting) as well as warehousing costs.

The invention described can be subject to modifications and variations.

## Claims

1. A set of modular parts for flexibly assembling pilot-operated gas pressure regulators for different uses and flow rates comprising:
- a body (2) made from a single block, with a gas inlet port (3) and a gas outlet port (4) each with first connecting means (10'), and a pair of auxiliary holes (5, 6) each with second connecting means (10");
- a set of flanges (7) for connecting gas infeed and delivery pipes (8, 9) differing in size depending on where the regulator (1) is used and on the diameter of the pipes (8, 9) and designed to be attached, using said first connecting means (10') to the inlet port (3) and to the outlet port (4) of the body (2);
- auxiliary means (11) for checking and regulating the gas flow and/or for closing the auxiliary holes (5, 6), it being possible to connect said auxiliary means (11) to the auxiliary holes (5, 6) using the second connecting means (10") depending on where the pressure regulator (1) is to be used.

2. The set of parts according to claim 1, **characterized in that** the auxiliary means (11) comprise an inner ring (12) located centrally in the body (2) around the centre (C) of the cross made by the aforementioned axes (X, Y) of the body (2) so as to form a calibrated passage for the gas flow.

3. The set of parts according to claim 2, **characterized in that** the ring (12) consists of two halves (12a, 12b) of which the first (12a) is fixed to a counter-ring (13) forming part of a toroidal wall (14) inside the body (2), while the second (12b) is screwed to the first half (12a) by screwing means (15) so that the two halves are positioned on opposite sides of the counter-ring (13); the toroidal wall (14) being configured in such a way as to form two passageways for the ports (3, 4) for the gas flowing into and out of the body (2).

4. The set of parts according to claim 3, **characterized in that** the first half (12a) of the ring (12) has slots in its free base in which coupling means (16) are inserted in order to fix it to the counter-ring (13), the free surfaces of both halves (12a, 12b) having at least one ring-shaped, sealing stop element (17) for part of the auxiliary means (11) to check and regulate the gas flow.

5. The set of parts according to claim 3, **characterized in that** the second half (12b) of the ring (12) has in it one or more holes (18) one end of which is on its base while the other end leads to a duct (19) made in the body (2) and leading out of the body to connect with corresponding external means (20) for checking the operation of the regulator (1).

6. The set of parts according to claim 1, **characterized in that** each of the zones of the body (2) forming the inlet and outlet ports (3, 4) or the auxiliary holes (5, 6) forms a circular portion (3c, 4c, 5c, 6c) that receives the corresponding flange (7) and the intermediate crown (21); each flange (7) and the intermediate crown (21) having in them a first set of holes (22) used to attach the flange (7) and the crown (21) to the corresponding circular portion (3c, 4c, 5c, 6c), and a second set of holes (23) used together with second screw means (25) to attach the corresponding pipes (8, 9) and the auxiliary means (11).

## Patentansprüche

1. Bauteilsatz zum flexiblen Zusammenbau von vorgesteuerten Gasdruckreglern für unterschiedliche Verwendungen und Durchflussmengen, enthaltend:
- einen Körper (2) aus einem einzigen Block mit einer Einlassöffnung (3) und einer Auslassöffnung (4) für das Gas, jede versehen mit ersten Anschlussmitteln (10'), sowie ein Paar von Zusatzbohrungen (5, 6), jede versehen mit zweiten Anschlussmitteln (10");
- einen Satz Flansche (7) zum Anschliessen von Einlassund Auslassrohren (8, 9) für das Gas, und zwar von unterschiedlichen Abmessungen, abhängig davon, wo der Regler (1) eingesetzt wird und von dem Durchmesser der Rohre (8, 9) und dazu bestimmt, unter Verwendung der genannten ersten Anschlussmittel (10') an der Einlassöffnung (3) und an der Auslassöffnung (4) des Körpers (2) befestigt zu werden;
- Hilfsmittel (11) zur Kontrolle und Regulierung des Gasflusses und/oder zum Verschliessen der Zusatzbohrungen (5, 6), wobei es möglich ist, die genannten Hilfsmittel (11) an die Zusatzbohrungen (5, 6) anzuschliessen, und zwar unter Verwendung der zweiten Anschlussmittel (10"), anhängig davon, wo der Druckregler (1) verwendet werden soll.

2. Bauteilsatz nach Patentanspruch 1, **dadurch gekennzeichnet, dass** die Hilfsmittel (11) einen inneren Ring (12) enthalten, angeordnet in der Mitte des Körpers (2) und um die Mitte (C) des Kreuzes, das aus den vorgenannten Achsen (X, Y) des Körpers (2) beschrieben ist, so dass ein kalibrierter Durchlass für den Gasfluss gebildet wird.

3. Bauteilsatz nach Patentanspruch 2, **dadurch gekennzeichnet, dass** der Ring (12) aus zwei Hälften (12a, 12b) besteht, von welchen die erste (12a) an einem Gegenring (13) befestigt ist, der Teil einer gewölbten Wand (14) im Inneren des Körpers (2) bildet, während die zweite (12b) durch Schraubmittel (15) an der ersten Hälfte (12a) verschraubt ist, so dass die beiden Hälften an den entgegengesetzten Seiten des Gegenringes (13) positioniert sind; wobei die gewölbte Wand (14) auf solche Weise ausgebildet ist, dass sie zwei Durchlasswege für die Öffnungen (3, 4) für den in den Körper (2) einund aus diesem ausströmenden Gasfluss bildet.

4. Bauteilsatz nach Patentanspruch 3, **dadurch gekennzeichnet, dass** die erste Hälfte (12a) des Ringes (12) in ihrer freien Basis Schlitze aufweist, in welche Verbindungsmittel (16) eingesetzt werden, um sie an dem Gegenring (13) zu befestigen, wobei die freien Oberflächen beider Hälften (12a, 12b) wenigstens ein ringförmiges, abdichtendes Anschlagelement (17) für einen Teil der Hilfsmittel (11) zur Kontrolle und Regulierung des Gasflusses haben.

5. Bauteilsatz nach Patentanspruch 3, **dadurch gekennzeichnet, dass** die zweite Hälfte (12b) des Ringes (12) eine oder mehrere Bohrungen (18) enthält, von welchen ein Ende sich an ihrer Basis befindet, während das andere Ende in einer in den Körper (2) eingearbeiteten Leitung (19) mündet, die aus dem Körper herausführt, um mit entsprechenden externen Mitteln (20) zur Betriebskontrolle des Reglers (1) verbunden zu werden.

6. Bauteilsatz nach Patentanspruch 1, **dadurch gekennzeichnet, dass** jeder der Bereiche des Körpers (2), welche die Einlass- und Auslassöffnungen (3, 4) oder die Zusatzbohrungen (5, 6) beschreiben, einen kreisförmigen Abschnitt (3c, 4c, 5c, 6c) bilden, der den entsprechenden Flansch (7) und den zwischengesetzten Kranz (21) aufnimmt; wobei jeder Flansch (7) und jeder zwischengesetzte Kranz (21) in sich einen ersten Satz von Bohrungen (22) aufweisen, benutzt zum Befestigen des Flansches (7) und des Kranzes (21) an dem entsprechenden kreisförmigen Abschnitt (3c, 4c, 5c, 6c), sowie einen zweiten Satz von Bohrungen (23), die zusammen mit den zweiten Schraubmitteln (25) verwendet werden, um die entsprechenden Rohre (8, 9) und die Hilfsmittel (11) zu befestigen.

## Revendications

1. Un ensemble de pièces modulaires pour le montage flexible de régulateurs de pression de gaz pilotés, destinés à diverses utilisations et divers débits, comprenant :
- un corps (2) , réalisé en bloc unique, ayant un orifice d'entrée de gaz (3) et un orifice de sortie de gaz (4), pourvus chacun de premiers moyens de raccordement (10'), et une paire d'ouvertures auxiliaires (5, 6) pourvues chacune de deuxièmes moyens de raccordement (10");
- une série de brides (7) pour le raccordement de conduits (8, 9), respectivement d'entrée et de sortie de gaz, dont la taille diffère en fonction de l'utilisation prévue du régulateur (1) et du diamètre de ces mêmes conduits (8, 9) et destinées à être accouplées, par l'intermédiaire des premiers moyens de raccordement (10') susmentionnés, avec l'orifice d'entrée (3) et l'orifice de sortie (4) du corps (2);
- des moyens auxiliaires (11) pour le contrôle et la régulation du débit de gaz et/ou pour la fermeture des ouvertures auxiliaires (5, 6), lesdits moyens auxiliaires (11) pouvant être raccordés aux ouvertures auxiliaires (5, 6) en question par l'intermédiaire des deuxièmes moyens de raccordement (10") en fonction de l'utilisation prévue du régulateur de pression (1).

2. L'ensemble de pièces selon la revendication 1, **caractérisé en ce que** lesdits moyens auxiliaires (11) comprennent une bague intérieure (12) disposée au centre du corps (2) autour du centre (C) de la croix définie par les axes (X, Y) du corps (2) de manière à déterminer un passage calibré pour le débit de gaz.

3. L'ensemble de pièces selon la revendication 2, **caractérisé en ce que** ladite bague (12) consiste en deux demi-parties (12a, 12b) dont la première (12a) est fixée à une contre-bague (13) faisant partie d'une paroi toroïdale (14) située à l'intérieur du corps (2), tandis que la deuxième (12b) est vissée à la première demi-partie (12a) par l'intermédiaire de moyens de vissage (15), de sorte que les deux demi-parties se trouvent sur des côtés opposés de la contre-bague (13); la paroi toroïdale (14) étant conformée de manière à définir deux canaux de passage pour les orifices (3, 4) d'entrée et de sortie du flux de gaz dans et du corps (2).

4. L'ensemble de pièces selon la revendication 3, **caractérisé en ce que** ladite première demi-partie (12a) de la bague (12) présente des orifices fendus dans sa base libre dans lesquels sont introduits des moyens d'accouplement (16) pour la fixer à la contre-bague (13), les surfaces libres des deux demi-parties (12a, 12b) ayant au moins un élément annulaire d'arrêt (17) étanche pour une partie des moyens auxiliaires (11) de contrôle et de régulation du débit de gaz.

5. L'ensemble de pièces selon la revendication 3, **caractérisé en ce que** la deuxième demi-partie (12b) de la bague (12) présente un ou plusieurs trous (18) dont une extrémité se trouve sur sa base tandis que l'autre extrémité débouche au niveau d'un conduit (19) réalisé dans le corps (2) et se raccordant à l'extérieur de ce même corps avec des moyens externes (20) correspondants destinés à contrôler le fonctionnement du régulateur (1).

6. L'ensemble de pièces selon la revendication 1, **caractérisé en ce que** chacune des zones du corps (2) définissant lesdits orifices d'entrée et de sortie (3, 4) ou lesdites ouvertures auxiliaires (5, 6) forme une portion circulaire (3c, 4c, 5c, 6c) qui reçoit la bride (7) correspondante et la couronne intermédiaire (21); chaque bride (7) et la couronne intermédiaire (21) présentant une première série de trous (22) utilisés pour accoupler la bride (7) et la couronne (21) avec la portion circulaire (3c, 4c, 5c, 6c) correspondante, et une deuxième série de trous (23) utilisés en association avec des deuxièmes moyens à vis (25) pour accoupler les conduits (8, 9) correspondants et les moyens auxiliaires (11).
